# FASCICULE DE BREVET EUROPEEN

(11) **EP 3 728 799 B1**
(45) Date de publication et mention de la délivrance du brevet: **15.12.2021**
(21) Numéro de dépôt: 18842440.2
(22) Date de dépôt: 20.12.2018
(51) Int. Cl.: F01D 25/28, F02K 1/72, B64D 29/08, B64F 5/50

(54) **NACELLE DE TURBORÉACTEUR COMPORTANT DES OUVERTURES DE CAPOTS AVANT D'ACCÈS À DES POINTS DE FIXATION DE LA NACELLE**
GONDEL FÜR TURBOSTRAHLTRIEBWERK MIT ÖFFNUNGEN VON VORDEREN SCHUTZKAPPEN FÜR DEN ZUGANG ZU BEFESTIGUNGSSTELLEN DER GONDEL
NACELLE FOR TURBOJET ENGINE, COMPRISING OPENINGS OF FRONT COWLS FOR ACCESS TO FIXING POINTS OF THE NACELLE

(30) Priorité: 22.12.2017 FR 1763120
(43) Date de publication de la demande: 28.10.2020
(73) Titulaire: Safran Nacelles, 76700 Gonfreville-l'Orcher (FR)
(72) Inventeur: BOILEAU, Patrick, 76700 GONFREVILLE L'ORCHER (FR); CARUEL, Pierre, 76700 GONFREVILLE L'ORCHER (FR)
(74) Mandataire: Germain Maureau
(86) Numéro de dépôt international: PCT/FR2018/053461
(87) Numéro de publication internationale: WO 2019/122753

(56) Documents cités:
- EP-A1- 3 095 970
- FR-A1- 2 370 616
- FR-A1- 2 917 710
- GB-A- 1 375 868
- US-A1- 2016 160 799

## Description

La présente invention concerne une nacelle pour un turboréacteur, comportant un inverseur de poussée à grilles délivrant un flux d'air froid vers l'avant.

Les turboréacteurs de motorisation des aéronefs disposés dans une nacelle, reçoivent de l'air frais venant du côté avant, et rejette du côté arrière les gaz chauds issus de la combustion du carburant délivrant une poussée.

Pour les turboréacteurs à double flux, des aubes de soufflante disposées autour du moteur génèrent un flux secondaire important d'air froid le long d'une veine annulaire passant entre ce moteur et la nacelle, qui ajoute une poussée élevée.

Certaines nacelles comportent un système d'inversion de poussée qui ferme au moins en partie la veine annulaire d'air froid, et rejette le flux secondaire radialement vers l'extérieur en le dirigeant vers l'avant afin de générer une poussée inversée de freinage de l'aéronef.

Un type d'inverseur de poussée à grilles connu, présenté notamment par le document US-A1-20160160799, comporte des grilles d'inversion formant une couronne disposée sous des capots avant, entourant la veine annulaire, qui sont reliées à des capots mobiles arrière coulissant axialement vers l'arrière sous l'effet de vérins.

Dans une position fermée de l'inverseur pour un flux direct, les capots mobiles ferment des passages latéraux vers l'extérieur disposés autour de la veine annulaire.

Dans une position ouverte de l'inverseur pour un flux inversé, les capots arrière manœuvrés par des vérins reculent sur des guidages longitudinaux, en entraînant les grilles qui se positionnent dans les passages d'airs latéraux. Des volets de fermeture ferment au moins partiellement le flux secondaire en arrière de ces passages, en refoulant le flux vers les grilles qui inversent la poussée.

Par ailleurs les différents panneaux ou capots latéraux recouvrant la nacelle, comportent des pivots ou des systèmes de démontage permettant de les faire basculer ou de les déposer complètement afin d'accéder aux éléments dans la nacelle, en particulier à la motorisation, pour des opérations de maintenance.

De plus la motorisation comporte généralement des points de fixation sur le pourtour, disposés en particulier radialement derrière les grilles de l'inverseur de poussée recouvertes par les capots avant quand cet inverseur est fermé, formant des points résistants recevant des interfaces de manutention pour soulever et transporter la motorisation complète avec sa nacelle.

En particulier on peut disposer deux points de fixation sur la motorisation, opposés sur un diamètre sensiblement horizontal, dans des positions appelées 3h et 9h, afin d'équilibrer un chargement de la motorisation.

Dans ce cas il faut en plusieurs endroits déposer les capots avant recouvrant les grilles d'inverseur, et ouvrir l'inverseur de poussée pour accéder aux points de fixation se trouvant derrière, afin de réaliser une manutention de la motorisation. En particulier les capots avant couvrants les points de fixation peuvent former un large secteur de la nacelle, ce qui nécessite la dépose d'éléments encombrants.

Ces différentes étapes demandent du temps, et nécessitent des espaces pour stocker les capots démontés, ce qui génère des contraintes et des coûts.

La présente invention a notamment pour but d'éviter ces inconvénients de la technique antérieure.

Elle propose à cet effet selon la revendication 1, une nacelle pour turboréacteur à double flux, comportant un inverseur de poussée à grilles équipé de grilles d'inversion disposées autour d'une veine annulaire d'air frais, sous des capots avant, ces grilles reculant avec des capots arrière mobiles ouvrant dans la veine annulaire des passages latéraux recevant ces grilles pour diriger le flux d'air frais vers l'avant, le turboréacteur comportant des points de fixation, la nacelle comprenant des trappes extérieures fermant des ouvertures des capots avant destinées à être disposées radialement à l'extérieur de ces points de fixation pour y accéder, cette nacelle étant remarquable en ce que chaque ouverture de trappe comporte un contour comprenant des bords de deux capots avant.

Un avantage de cette nacelle est que chaque ouverture de trappe comportant un contour comprenant des bords de deux capots avant, ne forme pas sur un même capot un contour entièrement fermé. On peut alors en conservant une interface de manutention installée sur un point de fixation derrière une ouverture, reliée à un moyen de levage et de transport, ouvrir les deux capots adjacents et les déposer sans être gêné par cet outil.

On peut alors déposer un turboréacteur d'un aéronef avec sa nacelle en conservant les capots installés dessus, puis l'emporter sur un chariot supportant ce turboréacteur grâce à ses points de fixation, vers un atelier de maintenance où les capots avant seront déposés facilement. On évite ainsi la dépose au préalable des capots avant, leur protection et leur stockage dans des conditions qui peuvent être délicates, en particulier auprès de l'aéronef.

La nacelle selon l'invention peut comporter une ou plusieurs des caractéristiques suivantes, qui peuvent être combinées entre elles.

En particulier, la nacelle peut comporter de chaque côté un capot avant inférieur et un capot avant supérieur, chaque ouverture de trappe étant disposée à la jonction de ces deux capots.

Dans ce cas, un capot avant peut comporter un bord rectiligne, une partie de ce bord rectiligne formant un des côtés de l'ouverture, les trois autres côtés de l'ouverture étant formés dans l'autre capot.

Avantageusement, le contour de chaque ouverture de trappe comporte une bordure formant un décalage radialement vers l'intérieur de la tôle des capots avant, recevant de manière ajustée l'épaisseur de la trappe.

Avantageusement, les grilles sont destinées à être disposées radialement à l'extérieur des points de fixation quand l'inverseur de poussée est fermé.

En particulier, la nacelle peut comporter deux ouvertures de trappes disposées sensiblement sur un diamètre horizontal de cette nacelle.

L'invention sera mieux comprise et d'autres caractéristiques et avantages apparaîtront plus clairement à la lecture de la description ci-après donnée à titre d'exemple, en référence aux dessins annexés dans lesquels :
- les figures 1 et 2 sont une vue d'ensemble et une vue de détail d'une nacelle de turboréacteur selon l'invention
- la figure 3 est une vue en coupe transversale de cette nacelle passant par l'axe des points de fixation ;
- la figure 4 est une vue du turboréacteur avec sa nacelle posé sur un chariot de manutention, comprenant les ouvertures de trappes sur les capots inférieurs;
- la figure 5 présente la dépose de ces capots inférieurs ; et
- la figure 6 présente la dépose des capots supérieurs pour une nacelle suivant une variante, comprenant les ouvertures de trappes disposées sur ces capots supérieurs.

Pour plus de clarté, les éléments identiques ou similaires sont repérés par des signes de référence identiques sur l'ensemble des figures.

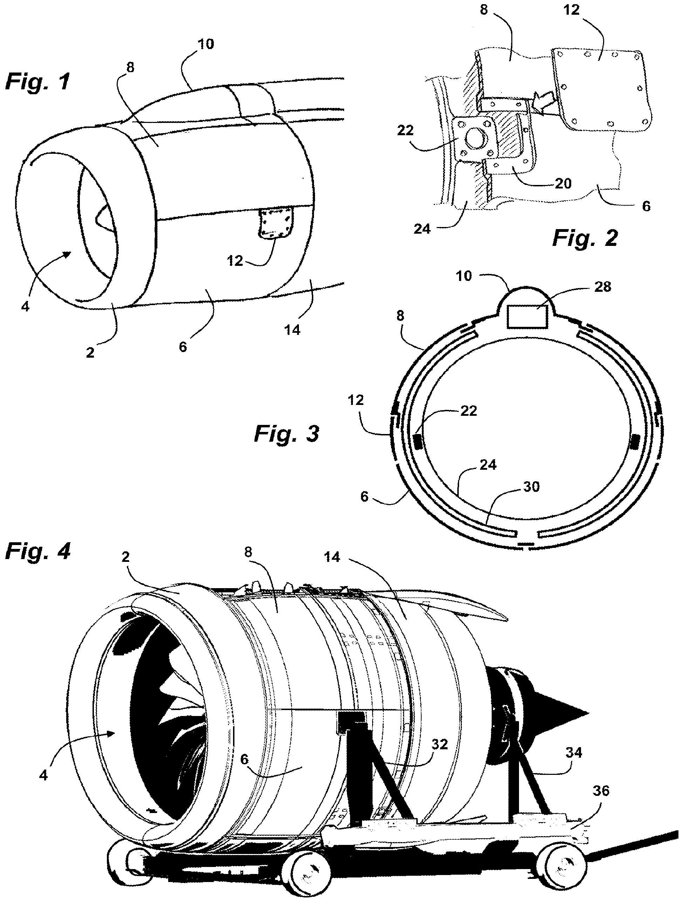

Les figures 1, 2 et 3 présentent une nacelle de turboréacteur à double flux supporté par un mât réacteur 28 disposé à 12h, comportant un capot circulaire d'entrée d'air 2 disposé à l'avant, entourant une entrée d'air 4.

Une partie avant formant un tronçon de capotage disposé dans le prolongement du capot d'entrée d'air 2, comporte deux capots avant inférieurs 6 reliés à deux capots avant supérieurs 8, chacun suivant une ligne de liaison disposée sensiblement à 3h ou à 9h. Un capot de mât réacteur 10 reliant sur le dessus les deux capots supérieurs 8, présente un profilage recouvrant le mât réacteur 28.

Une partie arrière comporte des volets arrière mobiles 14, qui reculent en entraînant des grilles d'inversion 30 pour les disposer dans des passages latéraux formés autour de la veine annulaire d'air froid, en aval des capots avant 6, 8.

Un cadre annulaire fixe 24 disposé radialement derrière les grilles d'inversion 30, comporte de chaque côté suivant un diamètre disposé horizontalement, sensiblement à 3h et à 9h, un point de fixation 22 comportant un grand perçage central de centrage d'un élément de manutention, entouré par quatre petits perçages pour la fixation de cet élément.

De chaque côté de la nacelle une ouverture dans les capots avant 6, 8 recevant une trappe 12 sensiblement carrée, disposée en face du point de fixation 22, comporte un côté supérieur constitué par le bord du bas du capot supérieur 8 qui est rectiligne, et trois autres côtés formés par une découpe dans le capot inférieur 6. De cette manière l'ouverture est entièrement réalisée dans le capot inférieur 6 mais avec des bords formés par deux capots, donnant un contour qui n'est pas enfermé dans un même capot.

Le contour de chaque ouverture formée sur les capots avant 6, 8 comporte une bordure comprenant un petit décalage de la tôle radialement vers l'intérieur, présentant des perçages, pour recevoir de manière ajustée la tôle de la trappe 12 fixée sur son pourtour par un ensemble de vis, en conservant le profilage aérodynamique extérieur de la nacelle.

La figure 4 présente un turboréacteur équipé de sa nacelle déposé de l'aéronef, après avoir glissé en dessous un chariot sur roues 36 comportant un bras arrière 34 supportant l'extrémité arrière du turboréacteur, et de chaque côté un bras avant 32.

Après avoir ouvert l'inverseur de poussée pour reculer les grilles 30 afin de dégager les points de fixation 22, et ouvert les trappes 12, on installe une interface de manutention sur chaque point de fixation, puis la nacelle est fixée par ces interfaces au chariot 36. La nacelle peut ensuite être envoyée dans un atelier de maintenance, les capots étant tous restés en place, continuent à protéger les équipements intérieurs de la nacelle.

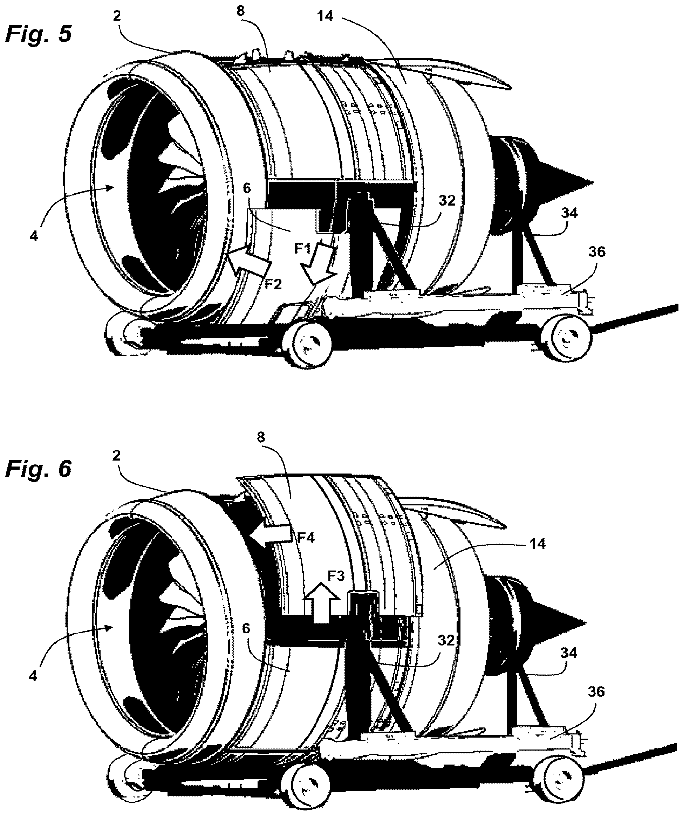

La figure 5 présente ensuite le retrait des capots avant inférieurs 6 de cette nacelle. Après la dépose des fixations de chaque capot inférieur 6, on fait glisser ce capot vers le bas suivant la flèche F1, l'interface de manutention restée en place en haut du bras avant 32 ne gênant pas pour sortir de l'ouverture de ce capot. Ensuite on retire le capot inférieur 6 en le glissant vers l'avant, suivant la flèche F2.

La figure 6 présente une nacelle suivant une variante, comportant l'ouverture pour l'interface de manutention réalisée par une découpe du capot supérieur 8, cette ouverture présentant un côté constitué par le bord du haut du capot inférieur 6 qui est rectiligne.

Après la dépose des fixations de chaque capot supérieur 8, on fait glisser ce capot vers le haut suivant la flèche F3, sans être gêné par l'interface de manutention restée en place, puis on retire ce capot supérieur en le glissant vers l'avant, suivant la flèche F4.

Suivant une autre variante, l'ouverture recevant une trappe 12 peut être faite à la fois sur les bords de deux capots adjacents, chaque capot ne présentant alors pas de bord rectiligne, mais une partie de la découpe de cette ouverture.

On obtient de manière simple et économique, en positionnant les bords des capots avant 6, 8 pour les faire passer par l'ouverture recevant les trappes, une simplification importante du procédé de dépose d'une motorisation avec sa nacelle et d'intervention sur cette motorisation.

On notera que sur une nacelle selon l'invention, les capots avant 6, 8 peuvent comporter des charnières pour les ouvrir par basculement, ou des fixations sur le pourtour complet pour le retirer entièrement. L'invention peut fonctionner de la même manière pour basculer un capot en laissant l'interface de manutention.

## Revendications

1. Nacelle pour turboréacteur à double flux, comportant un inverseur de poussée à grilles, équipé de grilles d'inversion (30) disposées autour d'une veine annulaire d'air frais, sous des capots avant (6, 8), ces grilles (30) reculant avec des capots arrière mobiles (14) ouvrant dans la veine annulaire des passages latéraux recevant ces grilles (30) pour diriger le flux d'air frais vers l'avant, le turboréacteur comportant des points de fixation (22), la nacelle comprenant des trappes extérieures (12) fermant des ouvertures des capots avant (6, 8) destinées à être disposées radialement à l'extérieur de ces points de fixation (22) pour y accéder, **caractérisée en ce que** chaque ouverture de trappe (12) comporte un contour comprenant des bords de deux capots avant (6, 8).

2. Nacelle selon la revendication 1, **caractérisée en ce qu'**elle comporte de chaque côté un capot avant inférieur (6) et un capot avant supérieur (8), chaque ouverture de trappe étant disposée à la jonction de ces deux capots.

3. Nacelle selon la revendication 2, **caractérisée en ce qu'**un capot avant (6, 8) comporte un bord rectiligne, une partie de ce bord rectiligne formant un des côtés de l'ouverture, les trois autres côtés de l'ouverture étant formés dans l'autre capot.

4. Nacelle selon l'une quelconque des revendications précédentes, **caractérisée en ce que** le contour de chaque ouverture de trappe comporte une bordure formant un décalage radialement vers l'intérieur de la tôle des capots avant (6, 8), recevant de manière ajustée l'épaisseur de la trappe (12).

5. Nacelle selon l'une quelconque des revendications précédentes, **caractérisée en ce que** les grilles (30) sont destinées à être disposées radialement à l'extérieur des points de fixation (22) quand l'inverseur de poussée est fermé.

6. Nacelle selon l'une quelconque des revendications précédentes, **caractérisée en ce qu'**elle comporte deux ouvertures de trappes (12) disposées sensiblement sur un diamètre horizontal de cette nacelle.

## Patentansprüche

1. Gondel für Zweikreis-Turbostrahltriebwerk, aufweisend eine Schubumkehr mit Gittern, ausgestattet mit Umkehrgittern (30), die um einen ringförmigen Frischluftkanal unter vorderen Kappen (6, 8) angeordnet sind, wobei diese Gitter (30) mit beweglichen hinteren Kappen (14) zurückfahren, die in dem ringförmigen Kanal seitliche Durchgänge öffnen, die diese Gitter (30) aufnehmen, um den Frischluftstrom nach vorn zu lenken, wobei das Turbostrahltriebwerk Befestigungsstellen (22) aufweist, wobei die Gondel äußere Klappen (12) umfasst, die Öffnungen der vorderen Kappen (6, 8) verschließen, die bestimmt sind, radial außerhalb dieser Befestigungsstellen (22) angeordnet zu sein, um dorthin zu gelangen, **dadurch gekennzeichnet, dass** jede Öffnung einer Klappe (12) eine Kontur aufweist, die Ränder von zwei vorderen Kappen (6, 8) umfasst.

2. Gondel nach Anspruch 1, **dadurch gekennzeichnet, dass** sie auf jeder Seite eine untere vordere Kappe (6) und eine obere vordere Kappe (8) aufweist, wobei jede Öffnung einer Klappe an der Verbindung dieser zwei Kappen angeordnet ist.

3. Gondel nach Anspruch 2, **dadurch gekennzeichnet, dass** eine vordere Kappe (6, 8) einen geraden Rand aufweist, wobei ein Teil dieses geraden Randes eine der Seiten der Öffnung bildet, wobei die drei anderen Seiten der Öffnung in der anderen Kappe ausgebildet sind.

4. Gondel nach einem der vorangehenden Ansprüche, **dadurch gekennzeichnet, dass** die Kontur jeder Öffnung einer Klappe eine Umrandung aufweist, die eine Versetzung des Blechs der vorderen Kappen (6, 8) radial nach innen bildet, die die Dicke der Klappe (12) angepasst aufnimmt.

5. Gondel nach einem der vorangehenden Ansprüche, **dadurch gekennzeichnet, dass** die Gitter (30) bestimmt sind, radial außerhalb der Befestigungsstellen (22) angeordnet zu sein, wenn die Schubumkehr geschlossen ist.

6. Gondel nach einem der vorangehenden Ansprüche, **dadurch gekennzeichnet, dass** sie zwei Öffnungen von Klappen (12) aufweist, die etwa auf einem horizontalen Durchmesser dieser Gondel angeordnet sind.

## Claims

1. A nacelle for a bypass turbojet engine, including a cascade thrust reverser, equipped with thrust reverser cascades (30) disposed around an annular flow path of fresh air, under front cowls (6,8), these cascades (30) moving back with movable rear cowls (14) opening, in the annular flow path, lateral passages receiving these cascades (30) to direct the fresh air flow forwards, the turbojet engine including fastening points (22), the nacelle comprising external hatches (12) closing openings of the front cowls (6, 8) configured to be disposed radially outside these fastening points (22) to access it, **characterized in that** each hatch opening (12) includes a contour comprising edges of two front cowls (6, 8).

2. The nacelle according to claim 1, **characterized in that** it includes on each side a lower front cowl (6) and an upper front cowl (8), each hatch opening being disposed at the junction of these two cowls.

3. The nacelle according to claim 2, **characterized in that** a front cowl (6, 8) includes a rectilinear edge, a portion of this rectilinear edge forming one of the opening sides, the other three sides of the opening being formed in the other cowl.

4. The nacelle according to any one of the preceding claims, **characterized in that** the contour of each hatch opening includes a border forming a radially inwards offset of the metal sheet of the front cowls (6, 8), receiving the thickness of the hatch (12) in an adjusted manner.

5. The nacelle according to any one of the preceding claims, **characterized in that** the cascades (30) are configured to be radially disposed outside the fastening points (22) when the thrust reverser is closed.

6. The nacelle according to any one of the preceding claims, **characterized in that** it includes two hatch openings (12) substantially disposed on a horizontal diameter of this nacelle.
